# EUROPEAN PATENT APPLICATION

(11) **EP 4 625 233 A1**
(43) Date of publication of application: **01.10.2025**
(21) Application number: 24472017.3
(22) Date of filing: 29.10.2024
(51) Int. Cl.: G06F 21/64, H04L 9/32, H04L 9/00

(54) **SYSTEM AND METHOD FOR ENHANCING SECURITY OF BIG DATA SYSTEMS USING BLOCKCHAIN TECHNOLOGIES**

(30) Priority: 02.11.2023 BG 587523
(71) Applicant: University of National and World Economy, 1700 Sofia (BG)
(72) Inventor: Dimitrov, Dimitar Panayotov, 1700 Sofia (BG); Kisimov, Valentin Stefanov, 1756 Sofia (BG); Stoychev, Kiril Petrov, 1700 Sofia (BG)

(57) **Abstract**

The patent is in the field of information technology, enhancing the security of Big Data Systems using Blockchain technologies and it consists of the following blocks:
Block 1 - Big Data System,
Block 2 - Data transmission networks,
Block 3 - Data Collector, Data Cleaning and Enrichment,
Block 4 - Data Allocator,
Block 5 - Management of Primary Data Repository for real-time processing,
Block 6 - Application Transaction Creator,
Block 7 - Blockchain ledger block generator with encryption, masking and editing,
Block 8 - Blockchain Ledger Verifier Part 1,
Block 9 - Blockchain Ledger Verifier Part 2,
Block 10 - Blockchain Ledger Verifier part 3,
Block 11 - Obtaining Consent,
Block 12 - Recording in the User Audit Register,
Block 13 - Recording in Blockchain Ledger,
Block 14 - Managing a User Blockchain ledger for data analytics, quality and security,
Block 15 - Defect Recorder in the Blockchain Ledger,
Block 16 - Creating a correction for the Blockchain ledger,
Block 17- User system,
Block 18 - Integrating Blockchain Authentication and Kerberos/Hadoop Authentication, Implementing User Keys and Roles,
Block 19 - Data sharing between authenticated users,
Block 20 - Business Rules Processor for Blockchain Ledgers,
Block 21 - Managing the life cycle of a User Blockchain ledger. Basically, in Big Data Systems based on Hadoop, data security.

The patent proposes a System and Method for enhancing the security of Big Data Systems using Blockchain technologies, adding to their architecture blocks implementing individual Blockchain technologies, expanding the Big Data System architecture, without integrating with a standalone Blockchain network (system), and through these proposed System and Method, data security in Big Data Systems is extended with 2 advanced levels of security, with the data at the first advanced level of security also having the possibility of processing in "near real time", and at the second advanced level, having higher security, the data is presented as a Blockchain ledger, operating predominantly not in "near real-time mode", but with faster processing compared to processing the Blockchain ledger in a Blockchain network, and also with automatic correction when detected mistake. The proposed System and Method can extend the security of any Hadoop-based Big Data System. The system consists of 21 blocks and the Method consists of 5 security functions.

The first extended security level creates data with an increased level of security capable of "near real-time" processing applied to Block 1 "Big Data System" whose security functions are extended using Block 17 "User System " through which the user is authenticated and authorized to work with the extended Big Data System, Block 18 "Integration of Blockchain Authentication and Kerberos/Hadoop Authentication, Application of User Keys and Roles" performing authentication and authorization of users and user systems with their user roles for general interaction with Kerberos the authentication of Big Data Systems using the created cryptographic keys and set potential data sources, Block 19 "Data sharing between authenticated users" for data exchange between users and/or user systems using the authorized rules and roles , Block 2 "Networks" for receiving data, the security of which is to be extended by the proposed System and Method, Block 3 "Data Collector, Cleaning and Enrichment" where data is collected and routed for storage, undergoing cleaning by content point of view and are enriched by adding new data or by modifying the existing data with other already arrived data of authenticated same or other users or user systems, stored through the Collector and having a logical and business connection with the incoming data, Block 4 "Distributor of data" redirecting the data to Block 5 "Management of Primary Data Storage for real-time processing", where data storage will be organized for which first advanced level security will be implemented. In the case of integrated authentication, the activity of the Kerberos function in Big Data Systems is used, authentication and authorization parameters are created for each user: a pair of cryptographic keys for authentication and for encryption; a list of authenticated users whose data is authorized for access, and these authentication and authorization parameters are integrated into Kerberos as encrypted data encrypted by the system administrative keys, and the authorization parameters are recorded in the Access Control List of the Big Data System. The processing of the data arriving from the networks also consists of: Removing duplicate records, correcting inconsistencies, filling in missing values and converting data into a certain format; Adding new data or by modifying existing data with other data already received; Modifying sensitive data in such a way that it has no or negligible value to unauthorized users ensuring anonymization or tokenization of the data; Edit by changing the content of the data. The created data with advanced security features on the one hand based on the primary data format in Big Data Systems - HDFS files, and on the other hand offers both increased security features and advanced forms of big data operation in "close to real time' such as in Spark, Hbase and Cassandra data formats.

In the second extended level of security, a Blockchain ledger is used, in which level of security is operated with Block 2 "Networks" for receiving data, the security of which is to be extended by the proposed System and Method, Block 3 "Data Collector, Clearing and enrichment" where the data is collected and sent to storage, being cleaned from a content point of view and enriched by adding new data or by modifying the existing data with other already arrived data of authenticated same or other users or user systems, stored through the Collector and having a logical and business relationship with the incoming data, Block 4 "Data Distributor" forwarding the data to Block 6 "Applied Transaction Creator" to create a transaction to be used as the basis for creating a block of data in the Blockchain ledger from Block 7 "Blockchain ledger block generator with encryption, masking and editing", as the current state of the Blockchain ledger from Block 14 "Management of User Blockchain ledger for data analytics, quality and security" is checked by Block 8 "Verifier of Blockchain ledger Part 1, Block 9 "Verifier of Blockchain ledger Part 2" and Block 10 "Verifier of Blockchain ledger Part 3" and upon positive verification from Block 11 "Obtaining consent" go to record this block in the Blockchain ledger with Block 14 "Management of a User Blockchain ledger for data analytics, quality and security" using Block 12 "Entry in a User Audit Register", Block 13 "Entry in the Blockchain book", in which the term "transaction" is used in the Blockchain book, it represents a certain amount of user data (data in the Big Data System) serving to create a "block of data" in the Blockchain book - a unit of record in the Blockchain book , while the term "Blockchain ledger" is a structured system of data-blocks, where each new record (Blockchain ledger block) contains the parameters "time-of-creation", "data source/sources", "data content (the transaction)", "authentication parameters" and "hash function of the previous record (block)", as the Blockchain ledger exists in several replicas, with the previous block-next block validation performed in 3 parallel parts (each verifier about 1/3 of the blocks in the Blockchain book), and the connection of the next block is made through the hash function of the previous block, determined by the principles of the Blockchain book, where the first 2 blocks of each Blockchain book contain the system administrative keys related to decryption of the authentication parameters of the individual user. When reading, writing or modifying data in the Blockchain ledger, the current content of the Blockchain ledger is checked through the specified checks. When a data impropriety is detected in a Blockchain ledger, the data is corrected (using the multiple replicas of the Blockchain ledger) and the corrected ledger is saved with its corrected content automatically, without user intervention.

## Description

### I. FIELD OF THE INVENTION

The patent is in the field of Big Data Systems built on the basis of Hadoop, where data security is enhanced by applying additional technological solutions typical of Blockchain systems (Blockchain networks), identified as Blockchain technologies.

### II. BACKGROUND OF THE INVENTION

Big data systems built on the Hadoop principle can have an advanced form of security applied to their underlying data format - HDFS, using MD5CRC security algorithms applied to parts of a block and to the entire block within an HDFS data block file [1] and applying a Composite-CRC decision (Composite-CRC) on all blocks in a single HDFS file [2]. Applying MD5CRC algorithms and Composite-CRC solution, as well as the creation of several copies (replicas) of a given file, ensures high data security in Big Data Systems. But regardless, this data security appears to be at a lower level than that of Blockchain systems [3]. When using the MD5CRC algorithm, HDFS calculates through the CRC algorithm the checksum for each part of the HDFS block (fixed part usually 512 bytes) and the MD5 hash function of each HDFS block. These checksums are stored with the blocks and are used to verify data integrity during read operations. The CRC/CRC32 algorithm is useful for error checking and simple data integrity checking when a sufficiently high level of security is not required. However, the CRC algorithm is not immune to preimage attacks, and it is relatively easy to find a message that produces a given CRC value. The MD5 algorithm is also not resistant to preimage attacks. A preimage attack is a type of cryptographic attack where an attacker tries to find a pre-image for a given hash value, which is why the MD5 algorithm is considered insufficiently secure for cryptographic purposes due to its vulnerability due to its fast calculation speed and its susceptibility to attacks with brute force. Applying the more secure SHA-3 hash algorithm instead of MD5 to HDFS files is a non-standard means and requires user-programming intervention in the Hadoop code. This hierarchical combination of CRC, MD5 and Composite-CRC is designed to protect against so-called triple "pre-image" attacks. After the first attack in 2009 on the MD5 algorithm [8], regardless of its requirement to break through a high computing system, it is assumed that MD5 cannot be a very secure algorithm and it follows that the security of the data in Hadoop's HDFS files is not has high protection.

In general, Blockchain networks (Blockchain systems) use specific technologies called "blockchain technologies". A blockchain network is a network of computers that are interconnected and share a copy of the same blockchain ledger. A blockchain ledger is a distributed ledger that records all transactions made on the network. Each computer on the network, also known as a node, maintains a copy of the blockchain ledger and helps verify and validate new transactions. The blockchain ledger facilitates the process of recording transactions and tracking assets in businesses [9]. At the same time, the data in the Blockchain ledger cannot be modified, only expanded, and it is limited in size.

In the patent "US Patent 11,010,552: System and method for securing data in a Hadoop cluster using blockchain technology" it is proposed to integrate a Big Data System with a fully functioning Blockchain network, in which encryption of the data recorded in the Big Data System is performed, as the encryption key is kept in the standalone Blockchain system. The patent "US Patent 10,797,649: System and method for managing data integrity in a Hadoop cluster using blockchain technology" also proposes the integration of a Big Data System with a fully functional Blockchain network, by making a hash function on each record of the Big Data System, which is recorded in the Blockchain system and a corresponding check is periodically made for the validity of the hash functions obtained from the data in the file with the recorded hash information in the Blockchain system. Patent "US Patent 10,600,867: System and method for auditing data access in a Hadoop cluster using blockchain technology" also offers the integration of a Big Data System with a fully functioning Blockchain network, and in the Blockchain system is stored only auditing of the incoming data, which data is record in the Big Data System. Patent "US Patent 10,564,853: System and method for providing secure data sharing in a Hadoop cluster using blockchain technology" also proposes the integration of a Big Data System with a fully functional Blockchain network, with the data in the Big Data System being encrypted with a key, and only an authorized user can obtain from the Blockchain system the key of the data to be decrypted with the key and then shared. In US Patent, US2023/0164272 [7], integration of a Big Data System with a fully functional Blockchain network is proposed, and similar to the previous patent, data encryption is performed before the recording process in the Big Data System, and the data is presented as encrypted container, then decrypted before sharing with another user, and the decryption key is kept in the Blockchain system. Similar is the situation in which the Smart Contract of Blockchain networks is used to determine access to data (as in patent US Patent No. 10,462,672). In these patents, there is one common position - it is proposed to integrate a Big Data System with a fully functional Blockchain network, with the data being recorded in the Big Data Systems, and corresponding security meta parameters being recorded in the Blockchain system, without architectural embedding in Big Data Systems of components to perform one or another function of blockchain technologies [6].

In US Patent No. 10,587,960 is proposed to use a Blockchain network and multiple big data servers, the Blockchain ledger of the Blockchain network is used to store all big data transactions, and Smart Contracts are also used to automate the processing of big data transactions and to ensure, that big data transactions are secure. This patent does not use a Big Data System for data storage with its rich processing and analysis capabilities, and the data is recorded in a complete and fully self-functioning Blockchain network, where data manipulation is extremely limited. On the other hand, creating a Blockchain ledger from all the records of a Big Data System would provide very slow performance, especially considering the size of the Big Data files and especially when modification or addition of data records has to be done.

From an operational point of view, both Big Data Systems operating at the HDFS file level and Blockchain systems (networks) are generally not intended for operational performance and modification of data. At the same time, there are plug-in software products for working with HDFS files in Big Data Systems, such as Spark, Hbase and Cassandra, in which the information can be modified (written, changed and deleted) in "near real-time" and which are quite acceptable for operational actions, while in Blockchain systems modification and deletion of data are inadmissible. At the same time, Blockchain systems work with significantly limited volumes of data - for example, in the Bitcoin Blockchain system, all the data is about 500 GB [4], and in the Ethereum Blockchain system, it is about 1200 GB [5], and on the other hand, in corporate computer systems (respectively with Big data systems) are required to work with hundreds of TB and PB (thousands of times more than in the world's Blockchain systems). The existing joint work of Big Data Systems and blockchain technologies is reduced to the integration of the two independent systems - Big Data Systems and Blockchain Systems, each representing a separate independent computer unit, connected by networks to each other [6], which does not basically solve the issue of expanding data security in Big Data Systems as a stand-alone system, applying blockchain technologies.

No patents have been found specifically targeting an architectural extension of Hadoop-based Big Data Systems to hard-integrate blocks implementing individual Blockchain technologies into their architecture, extending the Big Data System architecture without integrating a stand-alone Blockchain network by pays attention both to big data with "near real-time" processing capabilities, and to the creation of an additional hierarchical level of the same data but in a Blockchain ledger for higher security, selected according to certain criteria.

### III. DETAILED DESCRIPTION

The system for enhancing the security of Big Data Systems using Blockchain technologies consists of the following blocks:
Block 1 - Big Data System,
Block 2 - Data transmission networks,
Block 3 - Data Collector, Data Cleaning and Enrichment,
Block 4 - Data Allocator,
Block 5 - Management of Primary Data Repository for real-time processing,
Block 6 - Application Transaction Creator,
Block 7 - Blockchain ledger block generator with encryption, masking and editing,
Block 8 - Blockchain Ledger Verifier Part 1,
Block 9 - Blockchain Ledger Verifier Part 2,
Block 10 - Blockchain Ledger Verifier part 3,
Block 11 - Obtaining Consent,
Block 12 - Recording in the User Audit Register,
Block 13 - Recording in Blockchain Ledger,
Block 14 - Managing a User Blockchain ledger for data analytics, quality and security,
Block 15 - Defect Recorder in the Blockchain Ledger,
Block 16 - Creating a correction for the Blockchain ledger,
Block 17- User system,
Block 18 - Integrating Blockchain Authentication and Kerberos/Hadoop Authentication, Implementing User Keys and Roles,
Block 19 - Data sharing between authenticated users,
Block 20 - Business Rules Processor for Blockchain Ledgers,
Block 21 - Managing the life cycle of a User Blockchain ledger. Basically, in Big Data Systems based on Hadoop, data security.

Block 21 is specified in 2 levels:
- Network layer - levels at which the transmitted data (considered as binary aggregates transmitted data over a network protocol, e.g. TCP/IP) that is sent/received to/from Big Data Systems is secured, which we denote as "level-1". This level includes security tools such as Firewalls, Routers, Intrusion Prevention Systems, Intrusion Detection Systems, Adaptive Network Security, etc.;
- File level - a level at which data is recorded and processed as primary data in Big Data Systems (in HDFS format), which we denote as "level-2";

In the proposed invention, the 3rd level of data security is offered - Advanced level, in which data is recorded and processed with the help of an additional system using Blockchain technologies, which we denote as "level-3".

The second level of data security - The file level (HDFS files), has certain security features that are aimed at overcoming the issues of insufficient data security in the first level. The possible second-level security means are standard means provided by the Big Data Systems themselves, such as the means: MD5CRC algorithms for checking the correctness of the contents of blocks in an HDFS file, Composite-CRC for checking the correctness of the contents of a file, and several replicas of same file (file blocks); Kerberos authentication; Creating a user access list; Organization of access based on user roles; Organization of access rights to directories and files; Full internal audit mechanism; Data encryption; Creating and using user keys and certificates. The specified second level of security includes one or more of the means of security indicated by the first level. Regardless of these existing means of second-level security, in order to overcome some forms of insufficient second-level security, the present invention proposes the use of a third level of security - Advanced level based on the use of Blockchain technologies. This Advanced Level is provided by the System and Method proposed in the invention. The proposed third level of security uses one or more of the specified second level security means, i.e. the third level represents the use, extension and upgrade of the security means of the second level and, respectively, of the first level, by applying Blockchain technologies.

Big data systems based on Hadoop work with files of a sufficiently large volume - tens of terabytes and more, the processing of which can take a long enough time. In order to ensure high data security and, accordingly, relatively fast data processing, in the System and Method proposed in the invention, 2 sub-levels of the third level of security have been created:
- Use of data at an Advanced level, with data formats close to those of primary data in Big Data Systems, using a limited number of Blockchain technologies, but at the same time increasing the level of data security, processing this data in almost real time - "near real time". We refer to this level of security as "level-3.1". At this level, a certain compromise is made in relation to the high level of security provided by a large number of basic blockchain technologies, receiving the ability to process the data in a "near real-time" mode,
- Using data at an Advanced level, with a data format with sufficient abstraction compared to the primary data in Big Data Systems, using a significant number - the main Blockchain technologies, obtaining a high level of data security, but the prevailing processing of this data can not to occur in "near real time". We refer to this level of security as "level-3.2".

Thus, the proposed System and Method provide: both an increased level of data security - level 3.1 (first extended security level) and their processing is in "close to real time" mode; as well as at an even higher level of data security - level 3.2 (second extended security level), where their processing is predominantly not in "close to real-time" mode.

The System and Method proposed in the invention represent a security extension of a Big Data System built on the basis of Hadoop, i.e. uses and extends the functionalities of the Big Data System without requiring change or modification of the Big Data System. In the Big Data System, where data security is of "level-2", and through the System and Method proposed in the present invention, data security becomes "level-3.1" and/or "level-3.2". The proposed System and Method of the present invention store their highly secure data on the Big Data System, but in a format providing a higher level of abstraction and security. Thus, the System and Method offered in the invention are an extension / enhancement of the Big Data System, and the System and Method offered in the invention offer "level-3" data security, including "level-2" security.

Certain blocks of the System proposed in the invention connect with a Big Data System built on the basis of Hadoop, on which security forms are extended. Thus, the proposed System and Method extend / enhance the security of any Big Data System built on the basis of Hadoop (the Hadoop system is open source).

The task of the present invention is to propose a System and Method to extend / enhance the security of Big Data Systems by adding to their architecture blocks implementing individual Blockchain technologies, expanding the Big Data System architecture without integrating with a self-formed Blockchain network (system), and through these proposed System and Method, data security in Big Data Systems is extended with 2 advanced levels of security, with the data of the first extended level of security also having the possibility of processing in "close to real time", and of second advanced level, having higher security, the data is presented as a Blockchain ledger, operating predominantly not in "near real-time mode", but with faster processing compared to processing the Blockchain ledger in a Blockchain network, and also with automatic correction when an error is found. The proposed System and Method can extend the security of any Hadoop-based Big Data System.

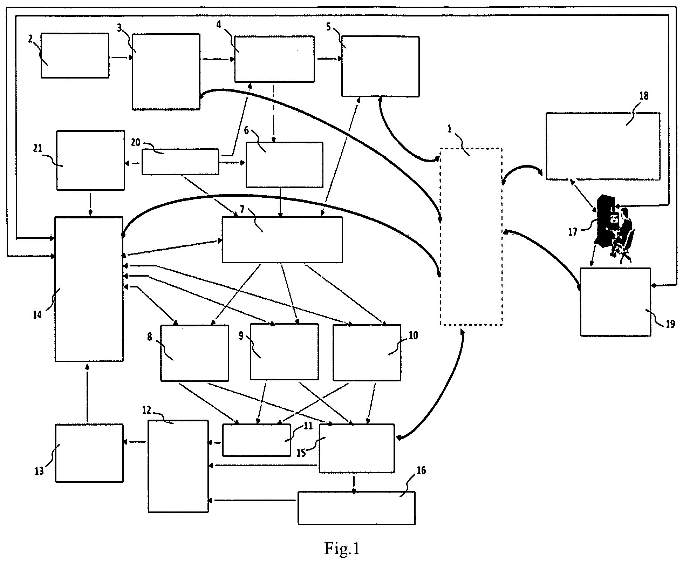

Figure 1 shows a block diagram of the "System for Extending / Enhancing the Security of Big Data Systems Using Blockchain Technologies".

Block 1 in the figure is the "Big Data System", the extension / enhancement of which is realized by the System and Method proposed in the present invention. The connections of Block 1 - the "Big Data System" with the blocks of the System proposed in the invention are represented in the figure by thicker, curved arrows.

Data for which high security must be ensured is fed to the System through a set of networks - Block 2 in the figure. This data is fed to "Data Collector, Cleansing and Enrichment" - Block 3, where the data is collected and directed for storage, subjected to cleaning from a content point of view and enriched by adding new data or by modifying the existing one's data with other already arrived data stored through the Collector and having a logical and business relationship with the incoming data. The data processed in this way is stored on the one hand in Block 1 - "Big Data System", and on the other hand it is transmitted for further processing to Block 4 - "Data Distributor". The Data Distributer redirects the data received in its block in two directions - either to block 5 "Management of the primary data repository for real-time processing", where data storage will be organized in level 3.1 security and will be implemented, or to Block 6 "Applied Transaction Builder" where the organization of security data at level 3.2 will begin. Block 5 "Management of Primary Data Storage for Real-time Processing" manages the storage of the data in Block 1 "Big Data System" by applying relevant Blockchain authentication using Kerberos technology to these data to have higher level of security. Authentication is performed by block 18 "Integrating Blockchain Authentication and Kerberos/Hadoop Authentication, Implementing User Keys and Roles". The data created in this way serves for real-time querying and analysis of large streams of continuous data in a "near-real-time" mode, including semi-structured and unstructured data, allowing also slightly poor quality data. The other higher security that this data has is the ability to share it through additional authentication using block 19 "Data sharing between authenticated users".

In Block 6 "Application Transaction Creator", a so-called "transaction" is created, which represents a certain amount of user data (data with logical binding in a given application), sent and/or received from one or several sources authenticated in the System by single authentication and serving to create a "block" in the Blockchain ledger. The concept of "block" in the System represents a unit of record in the Blockchain ledger, while the concept of "Blockchain ledger" represents a structured system of data-blocks, where each new record (block of the Blockchain ledger) contains the parameters "Time-of-creation", "Source /data sources", "Data content (transaction)", "Authentication parameters" and "Hash function of previous record (block)". Although the blocks in the Blockchain ledger appear logically consistent, their physical implementation may be different. Each block in the Blockchain Ledger is created by Block 7 "Block Generator for Blockchain Ledger with Encryption, Masking and Editing", which after processing in Block 14 "Management of User Blockchain Ledger for Data Analytics, Quality and Security" is recorded in Block 1 "Big Data System". The business rules for creating the application transaction, as well as the business rules for the operation of the Blockchain Ledger Block Generator, are defined by Block 20 "Blockchain Ledger Business Rules Processor". Block 7 "Block Generator for Blockchain Ledger with Encryption, Masking and Editing" also performs additional functions of masking and editing the data in the transaction of a block of the Blockchain ledger, as well as encrypting the entire block for recording in the Blockchain ledger using user keys in a result of the functions of Kerberos, the part of the Big Data System, and the Integrated Authentication implemented by Block 18. Data masking is a data protection technique that involves modifying sensitive data in such a way that it has no or little value to unauthorized users. Masking is essentially anonymization or tokenization, and the masking process is bidirectional, i.e. some data masked once, if necessary, can be unmasked in its original form providing unambiguous anonymization and de-anonymization. Editing is a higher form of masking where the content of the data can be changed. Block 20 "Blockchain Ledger Business Rules Processor" defines the operation rules of masking and editing performed by Block 7 "Block Shaper for Blockchain Ledger with Encryption, Masking and Editing".

The Blockchain ledger in the proposed System consists of a certain number of records (blocks), based on incoming and processed data. Due to the large volume of data generally existing in Big Data Systems, not all data are recorded in the Blockchain ledger, but those that meet certain criteria defined by Block 21 "Management of the Life Cycle of a User Blockchain Ledger". Block 21, in turn, adopts the Blockchain ledger rules from Block 20 "Blockchain Ledger Business Rules Processor". One of the rules refers to defining the life cycle of each Blockchain ledger, including the way to select data to form a given Blockchain ledger - how to select the data from which to build the Blockchain ledger (for example, the validity period of a given Blockchain ledger), or records meeting certain conditions to make up the Blockchain ledger, or a list of users to whom a given Blockchain ledger is accessible. Example rules for creating a Blockchain ledger can be: record every 10th record arriving in the System (every data arriving in the System is provided with level 3.1 protection, and every 10th data is provided with level 3.2 security); or to record data only from a certain set of sources (for example, the Blockchain ledger should consist of data related to users X and Y). Block 14 "Management of a User Blockchain Ledger for Analytics, Data Quality and Security" creates a Blockchain Ledger (one or more Blockchain Ledgers may exist in the System), and this Block 14 receives the content of the block of data from Block 7 "Block Generator for Blockchain Ledger with Encryption, Masking and Redaction". Before Block 14 writes a new block of data to the Blockchain ledger, it must check the existing blocks of data in the Blockchain ledger for valid content. This check is a calculation of the Hash function of the previous entry and a check with the equivalent Hash parameter recorded in the next block. In order to speed up this check-verification of data security, the verification is done in the System through 3 parallel processes carried out through Blocks 8, 9 and 10 - respectively " Blockchain Ledger Verifier Part 1", " Blockchain Ledger Verifier Part 2" and "Blockchain Ledger Verifier Part3". The system provides for the verification to be carried out in 3 parallel executed processes, by which the time for verification of the Blockchain ledger is shortened to 3. The result of the work of Blocks 8, 9 and 10 is checked in Block 11 "Obtaining consent", as in the satisfaction of verification from all three blocks and verification of correct interconnection between part 1 and part 2, as well as between part 2 and part 3, proceed to create a new block in the Blockchain ledger. Determining which check is performed by Block 8, which by Block 9 and which by Block 10 is dynamic and depends on the specific length (number of entries - blocks) in the Blockchain ledger, the current length of the Blockchain ledger being determined by Block 7 "Block Shaper for Blockchain Ledger with Encryption, Masking and Redaction". The work results of Blocks 8, 9 and 10 - respectively "Blockchain Ledger Verifier Part 1", "Blockchain Ledger Verifier Part 2" and "Blockchain Ledger Verifier Part 3" are submitted not only to Block 11 "Obtaining Consent", but also on Block 15 "Blockchain Ledger Defect Recorder", which is triggered when the verification in Blocks 8, 9 and 10 is not satisfactory and this means that there is an error in the data in the Blockchain Ledger. The detection of such an error, in addition to being logged, also leads to a process of automatic correction of the data, carried out by Block 16 "Creating a Correction for the Blockchain Ledger", leading to the creation of a corrected file Blockchain Ledger. In Block 12 "Entry in User Audit Register" a specialized audit register is created for all 3 possible actions occurring with the current Blockchain ledger: creation of a new entry after checking the validity of all previous entries; detection of wrong data in the Blockchain chain; Blockchain ledger correction done. When a new block is about to be recorded in the Blockchain chain after successful verification of all existing blocks in the Blockchain ledger, Block 13 "Entry in Blockchain ledger" performs the corresponding recording.

Block 14 "Management of a User Blockchain ledger for analytics, data quality and security" also performs another important function for data security - it provides additional data quality in the Blockchain ledger by enabling the verification of existing blocks in the Blockchain ledger when recording a new one content.

Block 18 "Integration of Blockchain Authentication and Kerberos/Hadoop Authentication, Application of User Keys and Roles" uses the operation of the Kerberos function in Hadoop-based Big Data Systems, by creating a pair of cryptographic keys of the users of the system proposed in the invention. This user key pair is intended to authenticate users operating at level 3.1 and level 3.2 security, but at the same time they are tied to the operation of the Kerberos part of the Big Data System. User key pairs are also recorded in the Big Data System in an encrypted form accessible from the Integrated Authentication Management. Encryption of the user key pair is done using an administrative system key pair. The system pair of administrative keys is recorded as the first and second blocks of each Blockchain ledger, and there is at least one Blockchain ledger in the System that has at least the first and second blocks with the system administrative keys.

Block 19 "Data sharing between authenticated users" implements provision of data created by one authenticated user to another authenticated user.

The data managed for recording in Block 5 "Management of Primary Data Storage for Real-time Processing" is security level 3.1 and is intended for real-time queries and analysis of large streams of continuous data, while the data in the Blockchain ledger, implemented through Block 14 "Management of a User Blockchain ledger for data analytics, quality and security" have security level 3.2 and is intended for OLAP queries and analyses (batch processing) operating with high quality and reliable data. Security level 3.1 implements 2 security levels: i) authentication of users and the data provided by them for the Big Data System; and ii) sharing data only between authenticated users. The security level 3.2 includes the security provided by level 3.1, plus the implementation of 3 more sub-levels of security: i) a level provided by the principles of the Blockchain book, and instead of consolidating the results between the nodes of the Blockchain network (as it is in the typical stand-alone Blockchain system), a verification of 3 parts is carried out of a working ledger having several replicas (copies) of the Blockchain ledger, ensuring the verification of the parts of the Blockchain ledger to be executed on separate computing cores/servers of the Big Data System; ii) data quality, representing cleaning, enrichment, masking, editing, encryption and monitoring (automatically by checking the correctness of the content of the Blockchain ledger whenever the content in it is changed); and iii) automatic correction of a Blockchain ledger upon detection of inaccuracies in its data.

The method of extending / enhancing the security of Big Data Systems using blockchain technologies implements an increase in the security level offered by a Big Data System (defined as security level 2),'which security level consists of: MD5CRC procedures for verifying blocks in an HDFS file, Composite-CRC for verifying a file and multiple replicas of the same file (file blocks) for HDFS file security; Kerberos authentication; Creating a user access sheet; Organization of access based on user roles; Organization of access rights to directories and files; Full internal audit mechanism; Data encryption; and Creating and using user keys and certificates. The implementation of the security extension / enhancement of Big Data Systems is supported by the Method presented in the present invention as level 3 and consists of 5 security functions grouped into level 3.1 and level 3.2, where level 3 including the proposed security means of level 2. The security which the Method offers at level 3.1 includes the security functions: i) authentication of users and the data provided by them for the Big Data System; and ii) share data only between authenticated users. The security that the Method offers at level 3.2 includes in itself the security provided by level 3.1, and in addition the inclusion of the security functions: i) modification of the principles of the Blockchain book, verifying in parallel 3 parts of a working book with several replicas (copies) of The Blockchain ledger, ensuring the verification of parts of the Blockchain ledger to be executed on separate computing cores/servers of the Big Data System; ii) provision of data quality, representing cleaning, enrichment, masking, editing, encryption and monitoring (automatically by checking the correctness of the content of the Blockchain ledger at each change of its content); and iii) automatic correction of a Blockchain ledger upon detection of inaccuracies in its data.

The security function proposed by the Method "Authentication of users and the data provided by them for the Big Data System" is implemented by Block 18 "Integration of Blockchain Authentication and Kerberos/Hadoop Authentication, Application of User Keys and Roles", using the activity of the Kerberos function in Big Data Systems based on Hadoop (from level 2), and creates for each user of the System authentication and authorization parameters: a pair of cryptographic keys for authentication and for encryption of the Blockchain book; a list of authenticated users whose data is authorized for access, and these authentication and authorization parameters are integrated into Kerberos as encrypted data encrypted through the system administrative keys. This security function of the Method also creates in each Blockchain ledger the first 2 records with the content of the system administrative keys, and the authorization parameters are recorded in the Big Data System Access Control so that they can also be used to operate with HDFS data or forms of data-upgrades of HDFS data in the Big Data System.

The security function "Data sharing only between authenticated users" offered by the Method ensures data sharing between users of the System who are previously authenticated and authorized for shared data use. Mainly Block 19 "Data sharing between authenticated users" performs this function, with the help of Blocks 1 and 14.

The security function proposed by the Method "Modification of the principles of the Blockchain ledger, performing verification of 3 parts of a working ledger with several replicas (copies) of the Blockchain ledger, ensuring that the verification of parts of the Blockchain ledger is executed on separate computing cores/servers of the System for big data" operates with a Blockchain book, which is characterized by the concept "transaction" representing a certain amount of user data serving to create a "block" in the Blockchain book, where the concept "block" is a unit of record in the Blockchain book, and by the concept "Blockchain book" representing a structured system of data-blocks where each new record (Blockchain ledger block) contains the parameters "Time-of-Creation", "data source/sources", "data content (transaction)", "atomic authentication parameters" and "Hash function of the previous record (block)". In the invention, the Blockchain ledger exists in several replicas, with the previous block-next block validation performed in 3 parallel parts (each part checking about 1/3 of the blocks in the Blockchain ledger), and the connection of the next block is made through the hash function of the previous one block defined by the principles of the Blockchain ledger. The first 2 blocks of each Blockchain ledger contain the system administrative keys related to decryption of the authentication parameters of the individual user. This function is mainly performed by Blocks 14, 7, 8, 9, 10, 11, 12 and 13.

The security function proposed by the Method, "Data quality consisting of cleaning, enrichment, masking, editing, encryption and monitoring" is implemented through Blocks 3, 7, 14, 8, 9, and 10. Data cleaning/cleaning helps to ensure, that the data is accurate, complete and consistent, leading to more reliable results. This process consists of identifying and correcting (or removing) corrupted or inaccurate records from a recordset, table or database and refers to identifying incomplete, incorrect, inaccurate or inappropriate parts of the data and then replacing, modifying or deleting of "dirty" or "raw" data. This process also consists of removing duplicate records, correcting inconsistencies, filling in missing values, and converting data into a specific format. Enrichment is the process of adding new data or by modifying existing data with other data that has already arrived. Data masking is a data protection technique that involves modifying sensitive data in such a way that it has no or negligible value to unauthorized users. Masking provided by the Method is essentially anonymization or tokenization, and the masking process is bidirectional, i.e. some data masked once, if necessary, can be unmasked in its original form providing unambiguous anonymization and de-anonymization. Editing is a higher form of masking where the content of the data can be changed. Encryption of Blockchain blocks is done using custom crypto keys. Monitoring is a verification of the correctness of all data in the Blockchain ledger, and this verification is performed both when data is created / modified in the ledger, and periodically - during a certain period of time.

The security function proposed by the Method "Automatic correction of Blockchain ledger when incorrectness is detected in its data" is implemented through Blocks 8, 9, 10, 11, 12, 15, 16, 13 and 14. Through this function, when incorrectness is detected of the data in a Blockchain ledger, the data is corrected (using the multiple replicas of the Blockchain ledger) and the corrected ledger is saved with its corrected contents automatically, without user intervention. This process can take place over time, depending on the size of the Blockchain ledger, without requiring user involvement.

### IV. BRIEF DESCRIPTION OF THE DRAWINGS

The present invention has only one figure - Figure 1. In the figure, Block 1 is a "Big Data System" whose security functions are extended by the proposed System and Method. In the figure, Block 2 is "Networks" through which the data arrives or be sent, Block 3 is "Data Collector, Cleaning and Enrichment", Block 4 is "Data Distributor", Block 5 is "Management of Primary Data Repository for real-time processing time", Block 6 is "Application Transaction Creator", Block 7 is "Blockchain Builder with Encryption, Masking and Editing", Block 8 is "Blockchain Ledger Verifier Part 1", Block 9 is "Blockchain Verifier ledger Part 2", Block 10 is "Blockchain Ledger Verifier Part 3", Block 11 is "Obtaining Consent", Block 12 is "Entry in User Audit Register", Block 13 is "Entry in Blockchain Ledger", Block 14 is "User Blockchain Ledger Management for Analytics, Data Quality and Security", Block 15 is "Blockchain Ledger Defect Recorder", Block 16 is " Creating a correction for the Blockchain ledger ", Block 17 is "User System", Block 18 is "Integrating Blockchain Authentication and Kerberos/Hadoop Authentication, Implementing User Keys and Roles", Block 19 is "Data Sharing Between Authenticated Users", Block 20 is "Blockchain Ledger Business Rule Processor" and Block 21 is "Management the life cycle of a User Blockchain Ledger".

Block 1 "Big Data System" is connected to Block 5 "Management of Primary Data Repository for Real-time Processing", Block 3 "Data Collector, Cleansing and Enrichment", Block 14 "Management of User Blockchain Ledger for Analytics, data quality and security", Block 18 "Integration of Blockchain authentication and Kerberos/Hadoop authentication, implementation of user keys and roles", Block 15 "Blockchain ledger defect logger" and Block 19 "Data sharing between authenticated users"; Block 2 "Networks" is connected to Block 3 "Data Collector, Cleaning and Enrichment"; Block 3 "Data Collector, Cleansing and Enrichment" is linked to Block 4 "Data Distributor"; Block 4 "Data Distributor" is related to Block 5 "Management of Primary Data Store for real-time processing" and Block 6 "Application Transaction Creator"; Block 6 "Applied Transaction Creator" is connected to Block 7 "Block Shaper for Blockchain Ledger with Encryption, Masking and Editing" and Block 20 "Business Rules Processor for Blockchain Ledgers"; Block 20 "Blockchain Ledger Business Rules Processor" is connected to Block 4 "Data Distributor", Block 21 "User Blockchain Ledger Lifecycle Management" and Block 7 "Blockchain Block Builder with Encryption, Masking and Editing" ; Block 7 " Blockchain Block Builder with Encryption, Masking and Editing " is connected to Block 8 "Blockchain Ledger Verifier Part 1", Block 9 "Blockchain Ledger Verifier Part 2", Block 10 "Blockchain Ledger Verifier Part 3", Block 14 "Management of a User Blockchain ledger for data analytics, quality and security" and Block 5 "Management of Primary Data Storage for real-time processing"; Block 8 "Blockchain Ledger Verifier Part 1" is connected to Block 11 "Obtaining Consent" and Block 15 "Blockchain Ledger Defect Recorder"; Block 9 "Blockchain Ledger Verifier Part 2" is related to Block 11 "Obtaining Consent" and Block 15 "Blockchain Ledger Defect Recorder"; Block 10 "Blockchain Ledger Verifier Part 3" is connected to Block 11 "Obtaining Consent" and Block 15 "Blockchain Ledger Defect Recorder"; Block 11 "Obtaining consent" is connected to Block 12 "Entry in the Consumer Audit Register"; Block 15 "Defect Recorder in the Blockchain Ledger" is connected to Block 16 "Create Correction for the Blockchain Ledger" and Block 12 "Entry in User Audit Register"; Block 12 "Entry in User Audit Register" is connected to Block 13 "Entry in Blockchain ledger" and Block 14 "Management of User Blockchain ledger for data analytics, quality and security"; Block 13 "Entry in Blockchain ledger" is connected to Block 14 "Management of User Blockchain ledger for data analytics, quality and security"; Block 14 "User Blockchain Ledger Management for Analytics, Data Quality and Security" is connected to Block 8 "Blockchain Ledger Verifier Part 1", Block 9 "Blockchain Ledger Verifier Part 2", Block 10 "Blockchain Ledger Verifier Part 3" and Block 21 "Managing the Life Cycle of a User Blockchain Ledger"; Block 17 "User System" is connected to Block 18 "Integration of Blockchain Authentication and Kerberos/Hadoop Authentication, Implementation of User Keys and Roles", Block 19 "Data Sharing between Authenticated Users" and Block 14 "User Blockchain Ledger Management for data analytics, quality and security'; Block 19 "Data sharing between authenticated users" is connected to Block 14 "User Blockchain Ledger Management for data analytics, quality and security"; Block 16 "Creating a Correction for the Blockchain Ledger" is connected to Block 12 "Entry in User Audit Register".

### V. EXAMPLES OF IMPLEMENTATION OF THE SYSTEM AND METHOD

***Example #1:*** The first example of the proposed System and Method is to extend the security of a Big Data System by applying a first advanced level of security in which data is received and operated with an increased level of security capable of being processed in "near real time" ". In this example, the System and Method proposed in the invention uses Block 1 "Big Data System", whose security functions are extended, Block 17 "User System" through which the user is authenticated and authorized to work with the Extended Big Data System , Block 18 "Integration of Blockchain Authentication and Kerberos/Hadoop Authentication, Application of User Keys and Roles" performing authentication and authorization of users and user application systems with their user roles for general interaction with Kerberos authentication of Big Data Systems using the created cryptographic keys and set potential data sources, Block 19 "Data sharing between authenticated users" for data exchange between users and/or user systems using the authorized rules and roles, Block 2 "Networks" for receiving data whose security is pending to be expanded from the proposed System and Method, Block 3 "Data Collector, Cleansing and Enrichment" where data is collected and directed to storage, subjected to content cleansing and enriched by adding new data or by modifying of the existing data with other already arrived data of authenticated same or other users or user systems, stored through the Collector and having a logical and business connection with the incoming data, Block 4 "Data Distributor" redirecting the data to Block 5 "Primary Data Storage Management for real-time processing", where data storage will be organized for which level 3.1 security will be implemented. In the case of integrated authentication, the activity of the Kerberos function in Big Data Systems is used, authentication and authorization parameters are created for each user: a pair of cryptographic keys for authentication and for encryption; a list of authenticated users whose data is authorized for access, and these authentication and authorization parameters are integrated into Kerberos as encrypted data encrypted by the system administrative keys, and the authorization parameters are recorded in the Access Control of the Big Data System. The processing of the data arriving from the networks also consists of: Removing duplicate records, correcting inconsistencies, filling in missing values and converting data into a certain format; Adding new data or by modifying existing data with other data already received; Modifying sensitive data in such a way that it has no or negligible value to unauthorized users ensuring anonymization or tokenization of the data; Editing by changing the content of the data. The created data with advanced security features on one hand is based on the primary data format in Big Data Systems - HDFS files, and on the other hand offers both increased security features and advanced forms of big data operation in "close to real time' such as in Spark, Hbase and Cassandra data formats.

***Example #2:*** The second example of the proposed System and Method is to extend the security of a Big Data System by applying a second extended level of security, by using a Blockchain ledger. In this example, the proposed System and Method in the invention consist of Block 2 "Networks" for receiving data, the security of which is to be extended by the proposed System and Method, Block 3 "Data Collector, Cleaning and Enrichment" where the data is collected and is sent for storage, being cleaned from a content point of view and enriched by adding new data or by modifying existing data with other already arrived data of authenticated same or other users or user systems stored through the Data Collector and having a logical and business engagement with the incoming data, Block 4 "Data Distributor" forwarding the data to Block 6 "Applied Transaction Creator" to create a transaction to be used as the basis for creating a block of data in a Blockchain ledger from Block 7 "Former of Block Blockchain Ledger with Encryption, Masking and Redaction", as the current state of the Blockchain Ledger from Block 14 "Management of User Blockchain Ledger for Data Analytics, Quality and Security" is checked by Block 8 "Blockchain Ledger Verifier Part 1, Block 9 "Blockchain Ledger Verifier Part 2" and Block 10 "Blockchain Ledger Verifier Part 3" and on a positive check from Block 11 "Obtaining Consent" go to recording this block of data in the Blockchain Ledger with Block 14 "Management of a User Blockchain ledger for data analytics, quality and security" using Block 12 "Entry in User Audit Register", and Block 13 "Entry in Blockchain ledger".

***Example #3:*** The third example is about reading a block from a Blockchain ledger for its participation in data analysis. In this example, a block of data in the corresponding security-correct Blockchain Ledger must be read and submitted to a User System for analysis. For this purpose, a request is made from Block 17 "User System" to read a certain block of data from a Blockchain ledger via Block 14 "Management of a User Blockchain ledger for data analytics, quality and security" by checking the validity of the data in the Blockchain the book through Block 8 "Verifier of Blockchain Ledger Part 1, Block 9 "Verifier of Blockchain Ledger Part 2" and Block 10 "Verifier of Blockchain Ledger Part 3" and upon satisfaction of the correctness of the data from Block 11 "Obtaining Consent", registers the reading request in Block 12 "Entry in User Audit Register" and transmits the required block from the Blockchain ledger through Block 14 "Management of User Blockchain ledger for data analytics, quality and security" to Block 17 "User System".

### VI. APPLICATION (USE) OF THE SYSTEM AND METHOD

The proposed System and Method are used to extend data security in a Big Data System, as the Big Data System itself is not modified / changed, but architectural blocks implementing Blockchain technologies are added to it, thereby increasing data security in the Big Data System with 2 advanced levels of security, where at the first advanced level of security having the possibility of "near real-time" processing, and at the second advanced level of security having higher security, the data is presented as a Blockchain ledger operating predominantly not "in a near real-time mode", but with faster processing compared to processing the Blockchain ledger in a Blockchain network (system), and also with automatic correction when an error is detected.

### References

1. New file checksum feature lets you validate data transfers between HDFS and Cloud Storage, https://cloud.google.com/blog/products/storage-data-transfer/new-file-checksum-feature-lets-you-validate-data-transfers-between-hdfs-and-cloud-storage
2. Expose file-level composite CRCs in HDFS which are comparable across different instances/layouts, https://issues.apache.org/jira/browse/HDFS-13056
3. Blockchain security: What keeps your transaction data safe?, https://www.ibm.com/blog/blockchain-security-what-keeps-your-transaction-data-safe/
4. Bitcoin Blockchain Size, https://ycharts.com/indicators/bitcoin blockchain size
5. Ethereum Chain Full Sync Data Size,
   https://ycharts.com/indicators/ethereum_chain_full_sync_data_size
6. Integrating big data and blockchain to manage energy smart grids-TOTEM framework, https://www.sciencedirect.com/science/article/pii/S2096720922000227
7. System and method for secure storage and management of transitory data using blockchain, US Patent, US2023/0164272
8. MD5, https://en.wikipedia.org/wiki/MD5
9. Blockchain overview, https://www.ibm.com/topics/blockchain#:~:text=Blockchain%20defined%3A%20 Blockchain%20is%20a,patents%2C%20copyrights%2C%20branding)

## Claims

1. System for expanding the security of Big Data Systems using blocks with Blockchain technologies, representing an upgrade - extension of Block 1 "Big Data System", consisting of Block 2 "Networks" for receiving and sending data, Block 3 "Collector of Data, Cleansing and Enrichment", Block 4 "Data Distributor", Block 5 "Management of Primary Data Store for Real-time Processing", Block 6 "Applied Transaction Creator", Block 7 "Block Shaper for Blockchain Ledger with encryption, masking and editing", Block 8 "Blockchain Ledger Verifier Part 1", Block 9 "Blockchain Ledger Verifier Part 2", Block 10 "Blockchain Ledger Verifier Part 3", Block 11 "Obtaining Consent", Block 12 "Entry in User Audit Register", Block 13 "Entry in Blockchain Ledger", Block 14 "Management of User Blockchain Ledger for Analytics, Quality and Data Security", Block 15 "Defect Recorder in Blockchain Ledger", Block 16 " Creating a correction for the Blockchain ledger ", Block 17 "User System", Block 18 "Integrating Blockchain Authentication and Kerberos/Hadoop Authentication, Implementing User Keys and Roles", Block 19 "Data Sharing between Authenticated Users", Block 20 "Business Rules Processor for Blockchain Ledgers" and Block 21 "User Blockchain Ledger Lifecycle Management", **characterized by** that Block 1 "Big Data System" is connected to Block 5 "Management of Primary Data Storage for processing in real-time", Unit 3 "Data Collector, Cleansing and Enrichment", Unit 14 "User Blockchain Ledger Management for Data Analytics, Quality and Security", Unit 18 "Integration of Blockchain Authentication and Kerberos/Hadoop Authentication, Application of User keys and roles", Block 15 "Blockchain Ledger Defect Recorder" and Block 19 "Data sharing between authenticated users"; Block 2 "Networks" is linked to Block 3 "Data Collector, Cleaning and Enrichment"; Block 3 "Data Collector, Cleansing and Enrichment" is connected to Block 4 "Data Distributor"; Block 4 "Data Distributor" is connected to Block 5 "Management of Primary Data Store for real-time processing" and Block 6 "Application Transaction Creator"; Block 6 "Applied Transaction Creator" is connected to Block 7 "Block Shaper for Blockchain Ledger with Encryption, Masking and Editing" and Block 20 "Business Rules Processor for Blockchain Ledgers"; Block 20 "Blockchain Ledger Business Rules Processor" is connected to Block 4 "Data Distributor", Block 21 "User Blockchain Ledger Lifecycle Management" and Block 7 " Blockchain ledger block generator with encryption, masking and editing "; Block 7 " Blockchain ledger block generator with encryption, masking and editing " is connected to Block 8 "Blockchain Ledger Verifier Part 1", Block 9 "Blockchain Ledger Verifier Part 2", Block 10 "Blockchain Ledger Verifier Part 3", Block 14 "Management of a User Blockchain ledger for data analytics, quality and security" and Block 5 "Management of Primary Data Storage for real-time processing"; Block 8 "Blockchain Ledger Verifier Part 1" is connected to Block 11 "Obtaining Consent" and Block 15 "Blockchain Ledger Defect Recorder"; Block 9 "Blockchain Ledger Verifier Part 2" is connected to Block 11 "Obtaining Consent" and Block 15 "Blockchain Ledger Defect Recorder"; Block 10 "Blockchain Ledger Verifier Part 3" is connected to Block 11 "Obtaining Consent" and Block 15 "Blockchain Ledger Defect Recorder"; Block 11 "Obtaining consent" is connected to Block 12 "Entry in the Consumer Audit Register"; Block 15 "Defect Recorder in the Blockchain Ledger" is connected to Block 16 "Create Correction for the Blockchain Ledger" and Block 12 "Entry in User Audit Register"; Block 12 "Entry in User Audit Register" is connected to Block 13 "Entry in Blockchain ledger" and Block 14 "Management of User Blockchain ledger for data analytics, quality and security"; Block 13 "Entry in Blockchain ledger" is connected to Block 14 "Management of User Blockchain ledger for data analytics, quality and security"; Block 14 "User Blockchain Ledger Management for Analytics, Data Quality and Security" is connected to Block 8 "Blockchain Ledger Verifier Part 1", Block 9 "Blockchain Ledger Verifier Part 2", Block 10 "Blockchain Ledger Verifier Part 3" and Block 21 "Managing the Life Cycle of a User Blockchain Ledger"; Block 17 "User System" is connected to Block 18 "Integration of Blockchain Authentication and Kerberos/Hadoop Authentication, Implementation of User Keys and Roles", Block 19 "Data Sharing between Authenticated Users" and Block 14 "User Blockchain Ledger Management for data analytics, quality and security'; Block 19 "Data sharing between authenticated users" is connected to Block 14 "User Blockchain Ledger Management for data analytics, quality and security"; Block 16 "Creating a Correction for the Blockchain Ledger" is connected to Block 12 "Entry in User Audit Register".

2. A method of enhancing the security of Big Data Systems using Blockchain technologies, in which the security of data in Big Data Systems is increased through the first-level security functions: i) authentication of users and the data provided by them for the Big data System; and ii) share data only between authenticated users; and of the second-level security functions including those of the first level: i) modification of the principles of the Blockchain ledger, performing the verification of 3 parts of a working ledger with several replicas (copies) of the Blockchain ledger, ensuring the verification of the parts of the Blockchain ledger to run on separate computing cores/servers of the Big Data System; ii) provision of data quality, representing cleaning, enrichment, masking, editing, encryption and monitoring (automatically by checking the correctness of the contents of the Blockchain ledger at each change of its contents); and iii) automatic correction of a Blockchain ledger upon detection of inaccuracies in its data.

3. The method according to claim 2, **characterized by** the security function "Authentication of users and the data provided by them to the Big Data System" performed by Block 18 "Integration of Blockchain authentication and Kerberos/Hadoop authentication, implementation of user keys and roles", using the activity of the Kerberos function in Big Data Systems, creating for each user the following authentication and authorization parameters such as a pair of cryptographic keys for authentication and for encryption of the Blockchain ledger, as well as a list of authenticated users whose data is authorized to access as these authentication and authorization parameters that integrate into Kerberos as encrypted data are encrypted using system administrative keys. This security function of the Method also creates in each Blockchain ledger the first 2 records with the content of the system administrative keys, and the authorization parameters are recorded in the Big Data System Access Control List so that they can also be used to operate HDFS data or forms of data-upgrades of HDFS data in the Big Data System.

4. The method according to claim 2, **characterized by** the security function "Data sharing only between authenticated users" ensuring data sharing between users in the System who are previously authenticated and authorized for shared data use.

5. The method according to claim 2, **characterized by** the security function "Modification of the principles of the Blockchain book, performing verification of 3 parts of a working ledger with several replicas (copies) of the Blockchain book, ensuring the verification of the parts of the Blockchain book to be executed on separate computing cores/servers of the Big Data System" operating with a Blockchain ledger that uses the concept of "transaction" representing a certain amount of user data serving to create a "block" in the Blockchain ledger - a unit of record in the Blockchain ledger, while the concept of "Blockchain ledger" is a structured system of data-blocks, where each new record (Blockchain ledger block) contains the parameters "time-of-creation", "source(s) of data", "data content (transaction)", " authentication parameters" and "hash function of the previous record (block)", as the Blockchain ledger exists in several replicas, with the previous block-next block validation performed in 3 parallel parts (each verifying about 1/3 of the blocks in the Blockchain ledger ), and the connection of the next block is made through the hash function of the previous block, determined by the principles of the Blockchain book, where the first 2 blocks of each Blockchain book contain the system administrative keys related to decryption of the authentication parameters of the individual user.

6. The method according to claim 2, **characterized by** the security function "Data quality representing cleaning, enrichment, masking, editing, encryption and monitoring" performs the cleaning of data by helping to ensure that the data is accurate, complete and consistent, leading to more reliable and informative results, which includes identifying and correcting (or removing) corrupted or inaccurate records from a record set, table or database and refers to identifying incomplete, incorrect, inaccurate or inappropriate parts of the data and then replacing, modifying or deleting the "dirty" or "raw" data, also includes removing duplicate records, correcting inconsistencies, filling in missing values and converting data to a specified format, also includes enrichment by adding new data or by modifying existing data with other data that has already arrived, also includes data masking, which is the modification of sensitive data in such a way that it has no or negligible value to unauthorized users, making the process two-way of anonymization and/or tokenization, also includes editing as a higher form of masking where data content can be changed, also includes encryption using user crypto keys, also includes monitoring the correctness of all data in a Blockchain ledger, and this check is performed both when creating / modifying data in the book, and periodically - during a certain period of time.

7. The method according to claim 2, **characterized by** the security function "Automatically correcting a Blockchain ledger upon detection of incorrectness in its data" performs detection of incorrectness of data in a Blockchain ledger, the data is corrected (using the several replicas of the Blockchain ledger) and the corrected book is saved with its corrected content automatically, without user intervention.
